# FASCICULE DE BREVET EUROPEEN

(11) **EP 2 719 291 B1**
(45) Date de publication et mention de la délivrance du brevet: **10.05.2017**
(21) Numéro de dépôt: 13306392.5
(22) Date de dépôt: 09.10.2013
(51) Int. Cl.: A23L 33/17, A61K 31/198, A61K 31/405

(54) **Produit diététique destiné à être administré à long terme aux personnes obèses opérées en chirurgie bariatrique**
Nahrungsmittel zur langfristigen Behandlung von Adipositaschirurgie Patienten
Dietetic product for long-term administration to patients after bariatric surgery

(30) Priorité: 09.10.2012 FR 1259606
(43) Date de publication de la demande: 16.04.2014
(73) Titulaire: International Nutrition Research Company, 1130 Luxembourg (LU)
(72) Inventeur: Vincent, Claude, 33000 BORDEAUX (FR)
(74) Mandataire: Aquinov

(56) Documents cités:
- WO-A1-2012/005568
- WO-A1-2013/060759
- AGHA-MOHAMMADI SIAMAK ET AL: "Nutritional deficiency of post-bariatric surgery body contouring patients: what every plastic surgeon should know", PLASTIC AND RECONSTRUCTIVE SURGERY MAY 2007 LNKD- PUBMED:17440337,, vol. 122, no. 2, 1 août 2008 (2008-08-01), pages 604-613, XP009170030, ISSN: 1529-4242
- SILVIA LEITE FARIA ET AL: "Dietary Protein Intake and Bariatric Surgery Patients: A Review", OBESITY SURGERY ; THE JOURNAL OF METABOLIC SURGERY AND ALLIED CARE, SPRINGER-VERLAG, NEW YORK, vol. 21, no. 11, 18 mai 2011 (2011-05-18), pages 1798-1805, XP019977519, ISSN: 1708-0428, DOI: 10.1007/S11695-011-0441-Y
- MARTINDALE ROBERT G ET AL: "Nutrition delivery for obese ICU patients: delivery issues, lack of guidelines, and missed opportunities", JOURNAL OF PARENTERAL AND ENTERAL NUTRITION, SAGE PUBLICATIONS, INC, US, vol. 35, no. 5, Suppl, 1 septembre 2011 (2011-09-01), pages 80S-87S, XP009170031, ISSN: 0148-6071
- THIBAULT R ET AL: "P077 ASSESSMENT OF PLASMA CITRULLINE, IRON, VITAMINE D AND NUTRITIONAL STATUS IN THE SHORT-TERM FOLLOW-UP OF ROUX-EN-Y GASTRIC BYPASS FOR MORBIDLY OBESE PATIENTS", CLINICAL NUTRITION SUPPLEMENTS, ELSEVIER, vol. 4, no. 2, 1 janvier 2009 (2009-01-01) , pages 57-58, XP026747149, ISSN: 1744-1161, DOI: 10.1016/S1744-1161(09)70127-9 [extrait le 2009-01-01]

## Description

La présente invention concerne un produit diététique et son utilisation pour améliorer et/ou maintenir à long terme les effets d'une opération de chirurgie bariatrique chez des patients obèses.

Cette dernière décennie, le nombre d'individus obèses n'a cessé d'augmenter, notamment dans les pays développés, avec surtout une forte croissance du nombre de personnes présentant une obésité sévère ou morbide.

La restriction calorique et le rééquilibrage alimentaire sont impuissants à normaliser le poids de ces personnes qui perdent quelques dizaines de kilogrammes et les reprennent largement sur la durée. Or, les risques entraînés par l'obésité sont nombreux en particulier pour l'obésité abdominale. En effet, on sait que l'obésité abdominale augmente le risque cardiométabolique, qui désigne la présence chez un individu de plusieurs signes cliniques et biologiques qui accroissent le risque de maladies cardiaques, d'accidents cardiovasculaires et de diabète de type 2.

Devant cette menace, les médecins ont de plus en plus recours à la chirurgie bariatrique, chirurgie consistant à restreindre la quantité et l'absorption des aliments. Elle englobe à la fois :
- la chirurgie restrictive qui diminue la taille de l'estomac et donc les quantités ingérées : anneau gastrique, gastrectomie longitudinale ou sleeve ; et
- la chirurgie malabsorptive et restrictive qui permet de réduire à la fois la quantité d'aliments et leur absorption : by-pass et dérivation pancréatique.

Le recours à ce type d'interventions permet d'aider les patients opérés à perdre du poids de façon très importante de l'ordre de 2 à 4kg par semaine au début pour aller jusqu'à une perte atteignant de 30 à 60% du poids initial.

De plus, en théorie, l'opération permet également de guérir le diabète et de réduire significativement le risque cardiométabolique.

Toutefois, malgré les effets positifs procurés par la chirurgie, il s'avère que le taux d'échec dans le long terme est très important. Cet échec provient rarement de la technique chirurgicale, mais est imputable le plus souvent à l'absence de suivi nutritionnel, d'accompagnement dans la nécessite de changer de mode de vie notamment pour combattre la sédentarité et de la prise en charge du stress chronique.

Après l'opération, le patient est mis en jeune durant 2 jours, ce qui provoque un état de cétose important dans ses conséquences pour les premiers jours d'alimentation. Ensuite, pendant 1 mois la personne doit absorber des aliments sous forme liquide ou semi-liquide en 5 à 6 prises par jour, cette alimentation fractionnée étant obligatoire en raison de la nouvelle taille de son estomac de 300 ml en moyenne. Puis, petit à petit, selon ses possibilités biologiques, le patient s'alimente sous forme plus solide pour arriver à une alimentation normale. Habituellement, l'absorption d'énergie est de 700 kcal pour les premières semaines pour monter progressivement à 1300 kcal et se recaler sur sa nouvelle Dépense Energétique Totale. Durant cette période d'adaptation, la personne fait souvent de nombreuses erreurs nutritionnelles comme s'alimenter avec des sucres rapides à charges glycémiques élevées ou même avec des aliments à charge calorique important (gras et sucres). Elle reprend souvent ses habitudes antérieures ayant menées à l'obésité, considérant que l'intervention chirurgicale a traité définitivement son problème, ce qui n'est pas le cas.

La publication AGHA-MOHAMMADI SIAMAK ET AL : « Nutritional deficiency of post-bariatric surgery body contouring patients : what every plastic surgeon should know », PLASTIC AND RECONSTRUCTIVE SURGERY MAY 2007 LNKD-PUBMED : 17440337, vol. 122, no. 2, 1 coût 2008, pages 604-613, XP009170030, issn : 1529-4242 indique qu'il peut être pertinent d'avoir recours à la chirurgie plastique après une intervention de chirurgie bariatrique mais qu'il existe des déficiences qui posent des problèmes de cicatrisation.

Actuellement, il n'existe aucune solution diététique efficace et adaptée aux besoins de ces personnes ayant subies une intervention de chirurgie bariatrique. Le document SILVIA LEITE FARIA ET AL : « Dietary Protein Intake and Bariatric Surgery Patients : A Review», OBESITY SURGERY ; THE JOURNAL OF METABOLIC SURGERY AND ALLIED CARE, vol. 21, no. 11, 18 mai 2011 (2011-05-18), pages 1798-1805, xp019977519, ISSN: 1708-0428, DOI : 10.1007/S11695-011-0441-Y indique l'importance des protéines et de certains acides aminés pour les patients ayant subi une opération de chirurgie bariatrique.

Les solutions existantes transposent des produits génériques de compléments de vitamines et de minéraux qui ne sont pas adaptées aux caractéristiques médicales du patient obèse opéré. Il subsiste donc un besoin pour une solution adaptée pour ce type de personne qui à la fois conserve certaines caractéristiques des obèses, subit les conséquences d'une opération en particulier dans le cadre de la chirurgie malabsorptive, et a des difficultés pour s'alimenter avec une perturbation alimentaire majeure, et ce durant toute leur vie, même lorsque leur alimentation redevient « normale ».

L'objectif de la présente invention est donc de répondre à ce besoin et de proposer une solution efficace, naturelle et facile d'utilisation, adaptée aux caractéristiques médicales du patient obèse opéré, qui permette de maintenir et/ou d'améliorer à long terme les effets d'une opération de chirurgie bariatrique.

A cet effet, l'invention propose d'utiliser une composition diététique particulière, comprenant au moins les constituants suivants :
- leucine,
- tryptophane et/ou 5-hydroxytryptophane,
- arginine et/ou citruline,
le ratio en poids de matière sèche entre le tryptophane et la leucine et/ou entre le 5-hydroxytryptophane et la leucine étant compris entre 7 et 10%,
ladite composition étant administrée à raison d'une quantité de leucine adaptée à une prise de leucine d'au moins 2,5g par jour par la personne obèse en phase post opératoire à long terme de l'intervention de chirurgie bariatrique. Avantageusement, une telle composition peut être utilisée comme produit diététique à administration orale destiné à augmenter et/ou maintenir les effets d'une opération de chirurgie bariatrique chez une personne obèse en phase post opératoire à long terme.

Cette composition peut être utilisée pour complémenter l'alimentation de la personne obèse opérée, et permet de faire augmenter la masse maigre ou la maintenir en relatif par rapport au poids total de la personne obèse, en phase post opératoire à long terme de l'intervention de chirurgie bariatrique. Elle permet aussi d'éviter les carences vitaminiques et minérales spécifiques à ce type d'opérations chirurgicales, mais également d'améliorer l'humeur et prévenir la dépression qui frappe 30% de ces personnes.

L'invention est à présent décrite en détails.

L'invention vise donc une composition diététique pour son utilisation comme produit diététique à administration orale pour augmenter et/ou maintenir les effets d'une opération de chirurgie bariatrique chez une personne obèse en phase post opératoire à long terme, comprenant au moins les constituants suivants :
- leucine,
- tryptophane et/ou 5-hydroxytryptophane,
- arginine et/ou citruline,
le ratio en poids de matière sèche entre le tryptophane et la leucine et/ou entre le 5-hydroxytryptophane et la leucine étant compris entre 7 et 10%,
ladite composition étant administrée à raison d'une quantité de leucine adaptée à une prise de leucine d'au moins 2,5g par jour par la personne obèse en phase post opératoire à long terme de l'intervention de chirurgie bariatrique.

Par composition ou produit diététique au sens de l'invention, on entend un produit destiné à une alimentation particulière, en complément d'une alimentation équilibrée et variée. En effet la composition selon l'invention est utilisée en complément d'une alimentation équilibrée et variée apportant du plaisir et revisitant les habitudes alimentaires de la personne pour en supprimer les erreurs. La restriction calorique se fait sur la diminution des quantités ingérés et non sur l'imposition d'un régime insipide qui sera rapidement abandonné.

Par phase post-opératoire à long terme au sens de l'invention, on entend à partir d'un mois après l'opération lorsque l'alimentation est normalisée, jusqu'à ce que le métabolisme soit totalement normalisé selon les examens biologiques et cliniques, soit plusieurs années.

La composition ou le produit diététique selon l'invention est donc particulièrement adapté aux personnes obèses ayant subies une opération de chirurgie bariatrique, en phase post opératoire à long terme.

En effet, une telle composition permet d'agir à la fois sur les problématiques liées au statut d'obèse de la personne, sur celles engendrées par l'intervention bariatrique qu'elle a subi et sur les conséquences des perturbations de l'alimentation qui en découle.

Tout d'abord, la personne obèse souffre d'une déficience importante en tryptophane provoquée soit par le catabolisme des adipocytokines inflammatoires, en particulier l'adipocytokine TNFa, sécrétée par le macrophage du tissu adipeux viscéral, soit par le cortisol dont la sécrétion est commandée par le stress chronique qui dérègle l'axe neurovégétatif. La conséquence de ce déficit en tryptophane circulant est que ce dernier ne peut pas passer la barrière encéphalique pour synthétiser la sérotonine car sa concentration par rapport aux acides aminés neutres (avec qui il est en compétition dans le transport) est trop faible. Sur le plan physiologique, la déficience en sérotonine cérébrale :
- empêche de faire jouer le cycle de satiété, d'autant plus que l'inflammation a déjà annihilé la régulation des hormones incrétines comme CCK et GLP1,
- joue sur le sommeil,
- joue sur l'humeur, ce qui amplifie l'action du stress et peut conduire à la dépression.

La déficience en tryptophane provoque également des boulimies et des compulsions sucrées.

Or, les compulsions sucrées et la dépression font perdre moins de poids, et conduisent même sur le long terme à une reprise de poids.

Les compulsions sucrées poussent la personne à remplacer les protéines et les glucides à charge glycémique basse par des sucres rapides à charges glycémique importante. La basse fréquence de la prise de protéines, en particulier de protéines animales, durant la période de perte de poids très rapide qui suit l'intervention, accélère une perte importante de la masse maigre musculaire, osseuse et des organes comme le coeur. Cette perte de masse maigre trop importante est le gage d'une reprise de poids car le métabolisme de base ne cesse de baisser.

Concernant les conséquences de l'intervention de chirurgie bariatrique, l'état cétonique provoqué par le jeune après l'opération, renforce encore plus la tendance à la boulimie et aux compulsions sucrées des personnes obèses, en provoquant le remplacement du glucose nécessaire au cerveau par le β-hydroxybutirate dont un des substrats est le tryptophane aggravant ainsi la déficience naturelle. Si l'inflammation a tendance à diminuer dans le temps avec la perte de poids et de la masse grasse viscéral, l'inflammation due au stress chronique avec la sécrétion d'ACTH et de cortisol ne sera pas influencée par l'intervention chirurgicale. Au contraire ces personnes ne peuvent plus mener la même vie qu'avant l'opération et un stress chronique s'installe avec le catabolisme du tryptophane par le cortisol.

Par ailleurs, après l'opération, la quantité de nourriture pouvant être ingérée par les personnes ayant subies une opération de chirurgie bariatrique est faible, de l'ordre de 20 à 30% et sur cette faible quantité, les opérés favorisent la prise de lipides et de glucides, en particulier de glucides à charges glycémiques élevées, au détriment des protides. En plus des compulsions sucrées liées au statut d'obèse de la personne, la faible prise de protéines est également due au fait que les personnes opérées ont une appétence modérée pour les protéines animales. Ce phénomène est établi et semblerait du à la digestibilité plus longue et difficile des macronutriments. Il existe donc un déficit général en protéines, et en particulier en acides aminés branchés, auquel s'ajoute pour les opérés en chirurgie bariatrique malabsorptive, une mauvaise absorption et un mauvais métabolisme des protéines au niveau intestinal, qui découle de l'opération elle-même et entraine des carences graves en protéines. Ce déficit peut provoquer une asthénie généralisée et peut conduire à une sarcopénie et à l'ostéoporose. Avantageusement, la composition selon l'invention, grâce à l'action combinée et synergique du tryptophane et/ou 5-hydroxytryptophane avec de la leucine et de l'arginine et/ou citruline, permet de lutter contre ces nombreuses perturbations qui conduisent à l'échec à long terme des effets d'une intervention de chirurgie bariatrique et qui jouent sur la santé des patients obèses opérés.

La présence de tryptophane et/ou de 5-hydroxytryptophane permet en particulier de combler les déficiences et de lutter contre les diverses manifestations qui en découlent. La leucine, associée à l'arginine et/ou citruline, jouent un rôle en particulier sur le maintien de la masse maigre. En effet, la leucine entre dans la synthèse des protéines, donc dans la formation de la masse maigre et la présence d'arginine et/ou de citruline, permet d'accélérer et d'amplifier cette synthèse. La composition diététique selon l'invention, est donc particulièrement adaptée aux personnes qui souhaitent réussir à long terme leur perte de gras viscéral en évitant la reprise de tour de taille, la dépression et les carences. Elle permet de lutter contre les conséquence liées à la fois aux déficiences spécifiques aux personnes obèses et aux carences déclenchées par l'intervention, et ce après un délai allant de un mois à plusieurs années après l'opération.

Elle peut être utilisée comme produit diététique à administration orale pour faire augmenter la masse maigre ou la maintenir en relatif par rapport au poids total de la personne obèse, en phase post opératoire à long terme de l'intervention de chirurgie bariatrique, en particulier pour complémenter son alimentation.

Les acides aminés présents dans le produit diététique selon l'invention sont préférentiellement des acides aminés obtenus par fermentation.

Le 5-hydroxytryptophane est préférentiellement un extrait au moins à 50% de griffonnia simplicifolia.

La leucine doit être présente en quantité suffisante pour exercer ses effets. Préférentiellement, la composition selon l'invention comprend une quantité de leucine adaptée à une prise d'au moins 2,5g de leucine par jour par la personne obèse en phase post opératoire à long terme de l'intervention de chirurgie bariatrique. Il s'agit de la quantité minimum nécessaire pour mettre en route la synthèse des protéines au niveau des organes.

Par ailleurs, de façon préférée, le rapport leucine sur arginine et/ou citruline sur arginine dans la composition est compris entre 0,8 et 1,4. Selon l'invention le tryptophane ou le 5-hydroxytryptophane représente entre 7 et 10% de la leucine (pourcentage en poids de matière sèche) dans la composition. Cette proportion particulière permet notamment d'assurer qu'une quantité adaptée de tryptophane traverse la barrière hémato-encéphalique pour être transformée en sérotonine de façon notamment à agir sur la sensation de satiété et à favoriser la gestion du stress. Préférentiellement, la composition selon l'invention, comprend :
- entre 30 et 50% de leucine,
- entre 2 et 5% de tryptophane ou de 5-hydroxytryptophane d'un mélange des deux, et
- entre 25 et 40% d'arginine ou de citruline ou d'un mélange des deux,
les pourcentages étant donnés en poids de matière sèche de la totalité des principes actifs présents de la composition.

Selon un mode de réalisation, la composition selon l'invention comprend pour une dose quotidienne de 8g :
- 2,5 à 4 g de leucine,
- 0,16 à 0,4 g de tryptophane ou de 5Hydroxy-tryptophane ou d'un mélange des deux,
- 2 à 3,2 g d'arginine ou de citruline ou d'un mélange des deux.

En plus des constituants essentiels que sont la leucine, le tryptophane et/ou le 5hydroxytryptophane, l'arginine et/ou la citruline, la composition selon l'invention peut également comprendre d'autres éléments comme du lactosérum, d'autres acides aminés, des acides gras, des vitamines et/ou des minéraux. Préférentiellement, la composition selon l'invention comprend également au moins un mélange de vitamines et minéraux.

Le mélange de vitamines et minéraux peut être constitué par au moins une des vitamines choisies parmi la vitamine A, B1, B6, B9, B12, C, D et E et par au moins un des minéraux choisis parmi le calcium, le magnésium, le zinc, le chrome, le fer ou le sélénium. Préférentiellement, le mélange de vitamines et minéraux est constitué par au moins le calcium, le magnésium, la vitamine B6, la vitamine B9, la vitamine D, le zinc et le fer.

La composition peut aussi comprendre des acides gras essentiels, en particulier des oméga 3, encore plus préférentiellement des oméga-3 d'origine végétale, à forte proportion d'EPA.

Ces constituants complémentaires permettent d'améliorer encore l'effet de la composition comme produit diététique augmentant et/ou maintenant les effets d'une opération de chirurgie bariatrique chez une personne obèse en phase post opératoire à long terme.

En particulier, ils permettent de combler des déficiences, carences et de lutter contre des complications liées à l'obésité et à l'opération. En effet, la personne obèse présente généralement des déficiences en magnésium, calcium, zinc, chrome, vitamine B6 et B9, vitamine D et oméga 3. Par ailleurs, l'opération fait apparaître indirectement à long terme des carences en protéines, fer, zinc, cuivre et vitamines A, E et B12.

La présence de vitamine B6 et de magnésium, dans la composition permet d'améliorer la synthèse de sérotonine à partir de tryptophane dans le cerveau. La vitamine B6 et le magnésium permettent également de renforcer l'effet coupe-faim du tryptophane.

L'apport de vitamine B9, permet d'améliorer encore l'action de la leucine sur la synthèse des protéines et le maintien de la masse maigre.

La vitamine B1 permet de combler des éventuelles déficiences provoquées par des vomissements, susceptibles de provoquer des ennuis neurologiques graves. Le chrome, permet d'éviter l'apparition de pics d'insuline post-prandiaux. Cette hyperinsulinémie est généralement suivie d'une hypoglycémie entraînant un malaise sérotoninergique pouvant aller jusqu'au coma.

La vitamine D permet d'éviter une perte trop importante de la masse maigre. En effet, lors de la perte de poids, un manque de vitamine D peut entraîner une perte de la masse maigre et osseuse qui peut devenir dangereuse et provoquer de la sarcopénie et de l'ostéoporose avec des accidents de fractures spontanée quelques années après l'opération et surtout pour les femmes après la ménopause.

L'apport de calcium permet de renforcer l'action de la vitamine D et joue également un rôle de coupe-faim.

Les acides gras essentiels, en particulier les oméga-3, permettent de limiter la sécrétion de fibrinogène. Chez la personne obèse, la localisation de la masse grasse au niveau abdominal développe une inflammation chronique de bas grade qui peut entraîner un diabète ou une maladie cardiovasculaire qui fragilise le patient pendant la récupération. Après l'opération, la perte de gras viscéral est la priorité pour combattre l'inflammation et contrôler l'athérogenèse et le risque d'éclatement des plaques d'athérome par la CRP ou la formation du thrombus par le fibrinogène. La CRP peut baisser lors d'une diète à très basses calories, mais très rarement le fibrinogène. L'apport d'oméga-3 dans la composition selon l'invention permet donc de faire baisser le fibrinogène, et donc de diminuer l'inflammation. Par ailleurs cette diminution du fibrinogène permet aussi de lutter contre la dépression et le stress chronique, car il est également impliqué dans ces phénomènes.

Le fer, associé à la vitamine C, peut permettre d'éviter les anémies qui touchent les personnes opérées.

Par ailleurs, la composition selon l'invention permet de limiter les complications dues à l'intervention, comme douleurs, ulcères, septies intra abdominales, resédation, pneumonie, actélectasie, perforation gastrique, fistule, embolie pulmonaire, abcès, vomissements ou thrombose. Cet effet préventif est lié en particulier à l'action sur l'inflammation de l'arginine, du zinc et/ou du chrome par une régulation du signal NF Kappa B des macrophages des adipocytokines et une régulation des hormones incrétines.

La composition selon l'invention peut être obtenue par simple mélange des constituants.

Préférentiellement, elle est obtenue par la mise en oeuvre des étapes suivantes :
- introduire et mélanger dans l'ordre sous forme de poudre la leucine, l'arginine (et/ou la citruline) et le tryptophane (et/ou le 5-hydroxytryptophane), et éventuellement le magnésium et le calcium lorsqu'ils sont présents dans la composition ;
- éventuellement ajouter au premier mélange sous forme de poudre les vitamines, les minéraux et les acides gras.

On obtient ainsi une poudre qui peut être transformée en comprimé ou liquide, ou bien utilisée dans sa forme poudre en sachets, sticks, bidons ou gélules par exemple.

La composition selon l'invention peut se présenter sous toute forme adaptée à une administration par voie orale. Elle peut notamment se présenter sous forme de poudre ou granulés, de boissons prêtes à l'emploi, de barres ou d'extrudés, la composition étant additionnée d'excipients et charges classiques connues de l'homme du métier.

Préférentiellement, elle se présente sous forme de poudre ou granules conditionnée dans un sachet à diluer dans l'eau.

La dose journalière de composition selon l'invention (dose de mélange de principes actifs sans les excipients) est préférentiellement comprise entre 7 et 10 g, de préférence en une prise lors du déjeuner ou en collation dans l'après-midi pour les personnes ayant des problèmes de sommeil.

L'invention est à présent illustrée par un exemple non limitatif de composition diététique, se présentant sous forme d'une poudre de 10 g (principes actifs et excipients) conditionnée dans un petit sachet.

Cette composition est obtenue à partir des principes actifs suivants :
- 2,5 g de leucine,
- 0,22g de tryptophane,
- 2 g d'arginine,
- 0,375 g de magnésium,
- 0,8 g de calcium,
- 0,65 g d'omégas 3,
- 1,1 mg de vitamine B1,
- 1,4 mg de vitamine B6,
- 200 *µ*g de vitamine B9,
- 2,5 *µ*g de vitamine B12,
- 5 *µ*g de vitamine D,
- 400 *µ*g de vitamine A,
- 6 mg de vitamine E,
- 80 mg de vitamine C,
- 10 *µ*g de chrome,
- 14 mg de fer,
- 27 *µ*g de sélénium,
- 10 mg de zinc.

## Revendications

1. Composition diététique pour son utilisation comme produit diététique à administration orale pour augmenter et/ou maintenir les effets d'une opération de chirurgie bariatrique chez une personne obèse en phase post opératoire à long terme, comprenant au moins les constituants suivants :
- leucine,
- tryptophane et/ou 5-hydroxytryptophane,
- arginine et/ou citruline,
le ratio en poids de matière sèche entre le tryptophane et la leucine et/ou entre le 5-hydroxytryptophane et la leucine étant compris entre 7 et 10%,
ladite composition étant administrée à raison d'une quantité de leucine adaptée à une prise de leucine d'au moins 2,5g par jour par la personne obèse en phase post opératoire à long terme de l'intervention de chirurgie bariatrique.

2. Composition pour une utilisation selon la revendication 1, pour faire augmenter la masse maigre ou la maintenir en relatif par rapport au poids total de la personne obèse, en phase post opératoire à long terme de l'intervention de chirurgie bariatrique.

3. Composition pour une utilisation selon la revendication 1 ou 2, pour complémenter l'alimentation de la personne en phase post opératoire à long terme de l'intervention de chirurgie bariatrique.

4. Composition pour une utilisation selon l'une des précédentes revendications, **caractérisée en ce que** le rapport leucine sur arginine et/ou citruline sur arginine est compris entre 0,8 et 1,4.

5. Composition pour une utilisation selon l'une des précédentes revendications, **caractérisée en ce qu'**elle comprend également un mélange de vitamines et minéraux.

6. Composition pour une utilisation selon la revendication 5, **caractérisée en ce que** le mélange de vitamines et minéraux est constitué par au moins une des vitamines choisies parmi la vitamine A, B1, B6, B9, B12, C, D et E et par au moins un des minéraux choisis parmi le calcium, le magnésium, le zinc, le chrome, le fer ou le sélénium.

7. Composition pour une utilisation selon l'une des revendications 5 ou 6, **caractérisée en ce que** le mélange de vitamines et minéraux est constitué par au moins le calcium, le magnésium, la vitamine B6, la vitamine B9, la vitamine E, la vitamine D, le zinc et le fer.

8. Composition pour une utilisation selon l'une des précédentes revendications, **caractérisée en ce qu'**elle comprend également des acides gras essentiels.

9. Composition pour une utilisation selon la revendication 8, **caractérisée en ce que** les acides gras essentiels sont des omégas 3.

10. Composition pour une utilisation selon l'une des précédentes revendications, **caractérisée en ce que** la leucine représente entre 30 et 50%, le tryptophane et/ou 5-hydroxytryptophane représente entre 2 et 5% et l'arginine et/ou la citruline représente entre 25 et 40%, les pourcentages étant donnés en poids de matière sèche de la totalité des principes actifs présents de la composition.

11. Composition pour une utilisation selon l'une des précédentes revendications, caractérisée en qu'elle est constituée par au moins de la leucine, du tryptophane et/ou 5-hydroxytryptophane, de l'arginine et/ou citruline, du magnésium, du calcium, des omégas 3, de la vitamine B1, de la vitamine B6, de la vitamine B9, de la vitamine B12, de la vitamine D, de la vitamine C, du fer et du zinc.

12. Composition pour une utilisation selon l'une des précédentes revendications, **caractérisé en ce qu'**elle se présente sous forme de poudre ou granulés, de boisson prête à l'emploi, de barres alimentaires ou extrudés.

13. Composition pour une utilisation selon l'une des précédentes revendications, à raison d'une dose comprise entre 7 et 10g par jour de la totalité des principes actifs présents dans la composition.

## Patentansprüche

1. Diätetische Zusammensetzung für deren Verwendung als diätetisches Produkt für die orale Verabreichung, um die Auswirkungen einer Operation der bariatrischen Chirurgie bei einer fettleibigen Person in der postoperativen Phase langfristig zu verbessern und/oder zu erhalten, die wenigstens die folgenden Bestandteile aufweist:
- Leucin,
- Tryptophan und/oder 5-Hydroxytryptophan,
- Arginin und/oder Citrullin,
wobei das Verhältnis des Trockengewichts zwischen Tryptophan und Leucin und/oder zwischen 5-Hydroxytryptophan und Leucin zwischen 7 und 10% liegt,
und wobei die Zusammensetzung unter der Maßgabe einer Menge von Leucin verabreicht wird, die auf die Aufnahme von Leucin von wenigstens 2,5 g pro Tag durch die fettleibige Person in der postoperativen Phase auf lange Sicht nach dem Eingriff der bariatrischen Chirurgie eingestellt ist.

2. Zusammensetzung für eine Verwendung nach Anspruch 1, um die fettfreie Körpermasse in Bezug auf das Gesamtgewicht der fettleibigen Person in der postoperativen Phase langfristig nach dem Eingriff der bariatrischen Chirurgie zu erhöhen oder zu erhalten.

3. Zusammensetzung für eine Verwendung nach Anspruch 1 oder 2, um die Ernährung der Person in der postoperativen Phase langfristig nach dem Eingriff der bariatrischen Chirurgie zu ergänzen.

4. Zusammensetzung für eine Verwendung nach einem der vorhergehenden Ansprüche, **dadurch gekennzeichnet, dass** das Verhältnis von Leucin zu Arginin und/oder Citrullin zu Arginin zwischen 0,8 und 1,4 liegt.

5. Zusammensetzung für eine Verwendung nach einem der vorhergehenden Ansprüche, **dadurch gekennzeichnet, dass** diese auch eine Mischung aus Vitaminen und Mineralstoffen umfasst.

6. Zusammensetzung für eine Verwendung nach Anspruch 5, **dadurch gekennzeichnet, dass** die Mischung aus Vitaminen und Mineralstoffen sich wenigstens aus einem der Vitamine zusammensetzt, die unter den Vitaminen A, B1, B6, B9, B12, C, D und E ausgewählt sind, und aus wenigstens einem der Mineralstoffe, die aus Calcium, Magnesium, Zink, Chrom, Eisen oder Selen ausgewählt sind.

7. Zusammensetzung für eine Verwendung nach einem der Ansprüche 5 oder 6, **dadurch gekennzeichnet, dass** die Mischung aus Vitaminen und Mineralstoffen sich wenigstens aus Calcium, Magnesium, Vitamin B6, Vitamin B9, Vitamin E, Vitamin D, Zink und Eisen zusammensetzt.

8. Zusammensetzung für eine Verwendung nach einem der vorhergehenden Ansprüche, **dadurch gekennzeichnet, dass** diese auch essentielle Fettsäuren aufweist.

9. Zusammensetzung für eine Verwendung nach Anspruch 8, **dadurch gekennzeichnet, dass** die essentiellen Fettsäuren Omega-3-Fettsäuren sind.

10. Zusammensetzung für eine Verwendung nach einem der vorhergehenden Ansprüche, **dadurch gekennzeichnet, dass** Leucin zwischen 30 und 50%, Tryptophan und/oder 5-Hydroxytryptophan zwischen 2 und 5% und Arginin und/oder Citrullin zwischen 25 und 40% ausmachen, wobei die Prozentangaben in Trockengewicht bezüglich der Gesamtheit der in der Zusammensetzung vorliegenden Wirkstoffe angegeben sind.

11. Zusammensetzung für eine Verwendung nach einem der vorhergehenden Ansprüche, **dadurch gekennzeichnet, dass** diese wenigstens aus Leucin, Tryptophan und/oder 5-Hydroxytryptophan, Arginin und/oder Citrullin, Magnesium, Calcium, Omega-3-Fettsäuren, Vitamin B1, Vitamin B6, Vitamin B9, Vitamin B12, Vitamin D, Vitamin C, Eisen und Zink besteht.

12. Zusammensetzung für eine Verwendung nach einem der vorhergehenden Ansprüche, **dadurch gekennzeichnet, dass** diese in der Form eines Pulvers oder Granulats, eines Fertiggetränks, Nahrungsriegels oder extrudierten Nahrungsmittels vorliegt.

13. Zusammensetzung für eine Verwendung nach einem der vorhergehenden Ansprüche, nach Maßgabe einer täglichen Dosis zwischen 7 und 10 g der Gesamtheit der in der Zusammensetzung vorhandenen Wirkstoffe.

## Claims

1. A dietetic composition for use thereof as an oraladministration dietetic product for increasing and/or maintaining the effects of bariatric surgery in an obese person in the long-term post-operative phase, comprising at least the following constituents:
- leucine,
- tryptophan and/or 5-hydroxytryptophan,
- arginine and/or citrulline,
the ratio by weight of dry matter between tryptophan and leucine and/or between 5-hydroxytryptophan and leucine is between 7% and 10%,
said composition being administered in a quantity of leucine suited to an absorption of leucine of at least 2.5 g per day by the obese person in long-term post-operative phase after bariatric surgery.

2. A composition for use according to claim 1 for increasing lean mass or maintaining it relatively with respect to the total weight of the obese person, in long-term post-operative phase following bariatric surgery.

3. A composition for use according to claim 1 or claim 2, for complementing the feeding of the person in long-term post-operative phase after bariatric surgery.

4. A composition for use according to any of the preceding claims, **characterised in that** the ratio of leucine to arginine and/or citrulline to arginine is between 0.8 and 1.4.

5. A composition for use according to any of the preceding claims, **characterised in that** it also comprises a mixture of vitamins and minerals.

6. A composition for use according to claim 5, **characterised in that** the mixture of vitamins and minerals consists of at least one of the vitamins chosen from vitamin A, B1, B6, B9, B12, C, D and E and at least one of the minerals chosen from calcium, magnesium, zinc, chromium, iron or selenium.

7. A composition for use according to either claim 5 or claim 6, **characterised in that** the mixture of vitamins and minerals comprises at least calcium, magnesium, vitamin B6, vitamin B9, vitamin E, vitamin D, zinc and iron.

8. A composition for use according to any of the preceding claims, **characterised in that** it also comprises essential fatty acids.

9. A composition for use according to claim 8, **characterised in that** the essential fatty acids are omega-3s.

10. A composition for use according to any of the preceding claims, **characterised in that** leucine represents between 30% and 50%, tryptophan and/or 5-hydroxytryptophan represents between 2% and 5% and arginine and/or citrulline represents between 25% and 40%, the percentages being given by weight of dry matter of all the active principles present in the composition.

11. A composition for use according to any of the preceding claims, **characterised in that** it comprises at least leucine, tryptophan and/or 5-hydroxytryptophan, arginine and/or citrulline, magnesium, calcium, omega-3s, vitamin B1, vitamin B6, vitamin B9, vitamin B12, vitamin D, vitamin C, iron and zinc.

12. A composition for use according to any of the preceding claims, **characterised in that** it is in the form of powder or granules, drink ready for use, food bars or extrusions.

13. A composition for use according to any of the preceding claims, at a dose of between 7 and 10 g per day of all the active principles present in the composition.
